# EUROPEAN PATENT SPECIFICATION

(11) **EP 3 735 045 B1**
(45) Date of publication and mention of the grant of the patent: **28.08.2024**
(21) Application number: 18896357.3
(22) Date of filing: 24.12.2018
(51) Int. Cl.: H04W 48/16, H04W 48/20

(54) **METHOD, APPARATUS, AND SYSTEM FOR ACCESSING NETWORK HOTSPOT DEVICE BY DEVICE TO BE DISTRIBUTED A NETWORK**
VERFAHREN, VORRICHTUNG UND SYSTEM ZUM ZUGRIFF AUF EINE NETZWERK-HOTSPOT-VORRICHTUNG DURCH EINE VORRICHTUNG, DIE ÜBER EIN NETZWERK VERTEILT WERDEN SOLL
PROCÉDÉ, APPAREIL ET SYSTÈME POUR ACCÉDER À UN DISPOSITIF DE POINT D'ACCÈS SANS FIL DE RÉSEAU PAR UN DISPOSITIF À DISTRIBUER DANS UN RÉSEAU

(30) Priority: 29.12.2017 CN 201711481930
(43) Date of publication of application: 04.11.2020
(73) Proprietor: ALIBABA GROUP HOLDING LIMITED, George Town, Grand Cayman (KY)
(72) Inventor: XIAO, Yuezhen, Hangzhou, Zhejiang 311121 (CN); ZHANG, Zongfeng, Hangzhou, Zhejiang 311121 (CN); YOU, Song, Hangzhou, Zhejiang 311121 (CN); ZHANG, Mingjun, Hangzhou, Zhejiang 311121 (CN); ZHAN, Huanyu, Hangzhou, Zhejiang 311121 (CN); LI, Xiaodong, Hangzhou, Zhejiang 311121 (CN); PENG, Yao, Hangzhou, Zhejiang 311121 (CN); ZHU, Yongli, Hangzhou, Zhejiang 311121 (CN)
(74) Representative: Finnegan Europe LLP
(86) International application number: PCT/CN2018/122997
(87) International publication number: WO 2019/128906

(56) References cited:
- EP-A1- 2 993 832
- WO-A1-2016/040176
- CN-A- 104 010 352
- CN-A- 104 301 891
- CN-A- 105 163 372
- CN-A- 105 246 074
- CN-A- 107 241 679

## Description

### TECHNICAL FIELD

The present application relates to communication technologies, and particularly to a method for accessing a network hotspot device by a unconfigured device, a plurality of machine readable storage media to enable accessing a network hotspot device by a unconfigured device, and a system for accessing a network hotspot device by a unconfigured device.

### BACKGROUND

With the development of the Internet of Things, in smart home scenarios of the Internet of Things, more and more smart devices use Wi-Fi to access home routers to realize functions such as remote device control and scene linkage.

However, after many smart devices are installed in the user's home, the user forgets to configure them to the network, or is unclear how to configure them to the network. As a result, many smart devices are not connected to the network, and the value of the smart devices is not fully utilized.

At the same time, in the existing configuration network solutions in the market, when there are multiple users configuring the network at the same time, the problem of configuration errors is prone to occur.

EP-A-2 993 832 teaches a method for registering home appliances to a server via a mobile terminal. The mobile terminal connects to an access point device and executes a product registration routine. It then transmits address and password information of the access point to the home appliance. The appliance, in a channel scanning mode, receives the access point information and uses this to connect to the access point and transmit product information to a server via the WLAN.

### SUMMARY

In view of the above problems, the present application provides an embodiment to provide a method to overcome the above problems of the above problems or at least partially address the above problems for accessing a network hotspot device by a unconfigured device, an apparatus for accessing a network hotspot device by a unconfigured device, and a system for accessing a network hotspot device by a unconfigured device.

In order to solve the above-mentioned problems, the embodiments of the present application disclose a method for accessing a network hotpot device by an unconfigured device. The network hotspot device creates a first hotspot and a second hotspot of one or more network hotspot devices, wherein the first hotspot is a hotspot that does not have Internet accessing capability, and the second hotspot is a hotspot capable of accessing the Internet, the method comprising:
reporting, by the unconfigured device, its own device information to the one or more network hotspot devices through the first hotspot of the one or more network hotspot devices;
sending, by the one or more network hotspot devices, the device information to a server;
sending, by one or more user terminals corresponding to the one or more network hotspot devices, a configuration request for the unconfigured device to the server, wherein a user terminal corresponding to a network hotspot device is a user terminal connected to a hotspot of the network hotspot device;
setting, by the server, a user terminal of which the configuration request is first received by the server as a target user terminal and sending a configuration response message to the target user terminal; and
initiating, by the target user terminal, an access process of the unconfigured device for the second hotspot of a target network hotspot device after receiving the configuration response message, wherein the target network hotspot device is a network hotspot device having a hotspot to which the target user terminal is connected.

Preferably, the step of reporting, by the unconfigured device, its own device information to the one or more network hotspot devices through the first hotspot of the one or more network hotspot devices for sending the device information to the server comprises:
accessing, by the unconfigured device, the first hotspots of network hotspot devices one by one using first hotspot access information of the first hotspot of each network hotspot device; and
sending, by the unconfigured device, its own device information to the network hotspot device through the first hotspot of a network hotspot device.

Preferably, the step of sending, by one or more user terminals corresponding to the one or more network hotspot devices, a configuration request for the unconfigured device to the server comprises:
sending, by the one or more user terminals, an unconfigured device query message to the corresponding network hotspot device;
generating, by the one or more network hotspot devices, an unconfigured device notification message for the unconfigured device for accessing the first hotspot of the network hotspot device based on the unconfigured device query message, and
receiving, by the one or more user terminals, the unconfigured device notification message and generating the configuration request for the unconfigured device based on the unconfigured device notification message; and
sending, by the one or more user terminals, the configuration request to the server.

Preferably, the step of initiating, by the target user terminal, an access process of the unconfigured device for the second hotspot of a target network hotspot device after receiving the configuration response message comprises:
sending, by the target user terminal, a first network configuration startup message to the unconfigured device after receiving the configuration response message;
accessing, by the unconfigured device, a third hotspot of the target network hotspot device after receiving the first network configuration startup message, wherein the third hotspot is a hotspot that does not have Internet accessing capability;
receiving, by the unconfigured device, second hotspot access information of a second hotspot sent by the third hotspot of the target network hotspot device; and
accessing, by the unconfigured device, the second hotspot of the target network hotspot device using the second hotspot access information.

Preferably, further comprising:
sending, by the server, a second network configuration startup message to the target network hotspot device after receiving the configuration request; and
generating, by the target network hotspot device, a third hotspot within a preset period of time after receiving the second network configuration startup message.

Preferably, the step of accessing, by the unconfigured device, the third hotspot of the target network hotspot device after receiving the first network configuration start message comprises:
accessing, by the unconfigured device, the third hotspot of the target network hotspot device using third hotspot access information of the third hotspot of the target network hotspot device.

Preferably, further comprising:
sending, by the server, a network configuration failure message to user terminals other than the target user terminal.

Preferably, further comprising:
obtaining, by the server, IP address information of the one or more network hotspot devices; and
determining, by the server, a region where the unconfigured device is located based on the IP address information of the one or more network hotspot devices.

The embodiments of the present application disclose a system for accessing a network hotspot device by an unconfigured device, characterized in, the system comprising:
an unconfigured device;
one or more network hotspot devices;
one or more user terminals; and
a server;
wherein the system is configured to perform said method.

The embodiments of the present application disclose a plurality of machine-readable media having stored thereon instructions that, when executed by a plurality of processors of a system, cause the system to perform said method.

The embodiments of the present application include the following advantages:

In the embodiment of the present application, the unconfigured device can report the device information to the network hotspot device through the first hotspot provided by the network hotspot device and having no Internet access capability, and the network hotspot device uploads the device information to the server. The server may determine the area where the unconfigured device is located based on the IP address information of the network hotspot device. Therefore, the server can also collect the area and device information of each unconfigured device when the device is not configured. Through the method of the embodiment of the present application, equipment suppliers can learn in which regions the product is sold better and in which regions it is sold poorly, so as to carry out targeted promotion.

On the other hand, when one or more user terminals simultaneously initiate a network configuration request to the same unconfigured device, the server will only return a response to the first requested target user terminal, and the target user terminal initiates the network configuration process. This avoids the situation that when multiple user terminals configure the network at the same time, the device will be incorrectly connected to the wrong network hotspot device.

### BRIEF DESCRIPTION OF THE DRAWINGS

The accompanying drawings described herein are used to provide further understanding of the present disclosure and constitute a part of the present disclosure. Exemplary embodiments of the present disclosure and descriptions of the exemplary embodiments are used to explain the present disclosure and are not intended to constitute inappropriate limitations to the present disclosure. In the accompanying drawings:
**FIG. 1** illustrates a flow chart of embodiment 1 of an exemplary method for accessing a network hotspot device by an unconfigured device.
**FIG. 2** illustrates a flow chart of embodiment 2 of an exemplary method for accessing a network hotspot device by an unconfigured device.
**FIG. 3** illustrates a flow chart of embodiment 3 of an exemplary method for accessing a network hotspot device by an unconfigured device.
**FIG. 4** illustrates a flow chart of embodiment 4 of an exemplary method for accessing a network hotspot device by an unconfigured device.
**FIG. 5** illustrates a flow chart of embodiment 5 of an exemplary method for accessing a network hotspot device by an unconfigured device.
**FIG. 6** illustrates a flow chart of embodiment 6 of an exemplary method for accessing a network hotspot device by an unconfigured device.
**FIG. 7** illustrates a flow chart of an exemplary method for accessing a network hotspot device by an unconfigured device.
**FIG. 8** illustrates a schematic diagram of an exemplary system for accessing a network hotspot by an unconfigured device.
**FIG. 9** illustrates a schematic diagram of embodiments 1 of an exemplary apparatus for accessing a network hotspot by an unconfigured device.
**FIG. 10** illustrates a schematic diagram of embodiment 2 of an exemplary apparatus for accessing a network hotspot by an unconfigured device.

### DETAILED DESCRIPTION

In order to make the above-mentioned objects, features and advantages of the present application more obvious and understandable, the present disclosure will be described in further detail below with reference to the accompanying drawings and specific embodiments.

In the Internet of Things scenario, a router is provided to provide WIFI hotspots for smart devices. The router can provide hotspots with Internet access and hotspots without Internet access. This kind of hotspot with the ability to access the Internet can be called an online hotspot.

Network distribution refers to the process of sending access information of Internet hotspots to smart devices. The access information includes Service Set Identifier (SSID) and password of the hotspot.

In an existing network configuration approach, the Internet hotspot is provided by a router. The user terminal (mobile phone) provides a hotspot for the smart device. The user terminal can place the access information of the Internet hotspot in a specific Wi-Fi data message using a special encoding method and send it to the smart device. The smart device obtains Internet access by monitoring the message Hotspot access information.

However, the network configuration approach has the following disadvantages.
1) The configuration time is longer. Configuration network packets can only be carried in Wi-Fi management frames. Each packet carries a small amount of access information. In practice, it is often necessary to send dozens of packets to carry the complete access information. Due to the large amount of the Wi-Fi channels, smart devices need to traverse all Wi-Fi channels to monitor the configuration network packets. It often takes about 60 seconds to traverse all Wi-Fi channels.
2) The user needs to manually enter the access information of the Internet hotspot. In order to ensure the security of the password, the home router often requires the password to be at least 8 bytes long, and requires letters, numbers, and special symbols. Therefore, the process of entering the SSID and password on the mobile phone is cumbersome, time-consuming, and error-prone.
3) The applicability of the approach is getting worse. Currently the family and other router's Wi-Fi often support 2.4 GHz and 5GHz two bands. When the phone identifies that the router supports dual-band, it will give priority to connecting to the 5GHz hotspot. Current smart devices mostly support only 2.4GHz of Wi-Fi. When mobile phones send information about the network configuration in the 5GHz frequency band, and smart devices cannot monitor relevant data at 2.4GHz.
4) The problem of mismatch when multiple users are configuring the network at the same time can occur. Assume that user A purchases a device A, and neighbor user B purchases device B of the same model, and user A and user B initiate network configuration at the same time. Since device A and device B can receive configuration network information sent by the two users, it can occur that device A receives the user B configuration network information and is connected to the user B home router's hotspot and that device B is erroneously connected to the user A's home router's hotspots.

In another existing network configuration approach, a smart device starts a Wi-Fi hotspot, a mobile phone connects to the Wi-Fi hotspot of the device, and transmits the SSID and password of the router's Internet hotspot to the smart device, and then connects the smart device to the Internet hotspot and then the Internet.

However, this configuration method has the following disadvantages.

First, the user manually enters the SSID and password of the Internet hotspot. The process of user inputting SSID and password is tedious and error-prone.

Second, after the phone is connected to the device hotspot, the phone usually checks hotspots to determine whether Internet connection is available. If the connection is not available, the phone can switch back to 4G network of the Internet operators of the phone. When the phone switches back before the network configuration is completed, network configuration failure can occur.

Third, configuration mismatch can also occur in this approach when multiple users are configuring the network at the same time. When user A and user B purchase devices of the same model and initiate network configuration at the same time, it can happen that device A is connected to user B's home router hotspot and device B is connected to user A's home router hotspot.

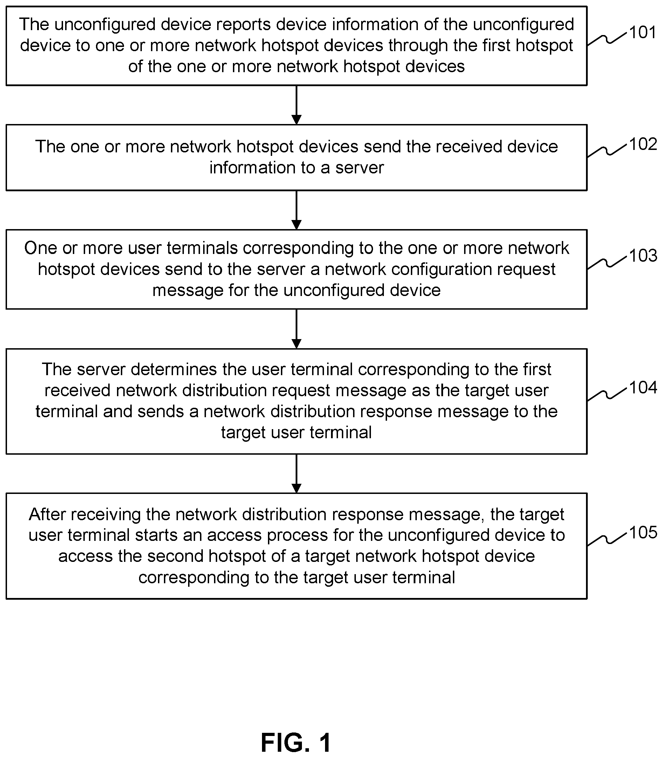

Referring to FIG. 1, a flowchart of embodiment 1 of an exemplary method for accessing a network hotspot device by an unconfigured device. The network hotspot device has a first hotspot and a second hotspot. The method can include the following steps.

In step 101, an unconfigured device reports its own device information to the one or more network hotspot devices through the first hotspot of the one or more network hotspot devices. The network hotspot device can be a router or a wireless Access Point (AP) without routing capabilities. The network hotspot devices can create multiple hotspots at the same time, and each hotspot has an SSID for distinguishing from other hotspots.

In the embodiment of the present application, the network hotspot device creates the first hotspot and the second hotspot after power-on. The first hotspot is a hotspot that does not have Internet access capability, and the second hotspot is a hotspot with Internet access capability. If the unconfigured device accesses the first hotspot, the unconfigured device can communicate with the network hotspot device but cannot access the Internet through the network hotspot device. If the unconfigured device accesses the second hotspot, the unconfigured device can communicate with the network hotspot device and can also access the Internet through the network hotspot device.

In the embodiment of the present application, if there are multiple network hotspot devices near the unconfigured device, the unconfigured device can sequentially access the first hotspot of each network hotspot device and report its own device information. The device information can include a device model and a MAC address.

After accessing the first hotspot of the network hotspot device, the unconfigured device sends the device information to the network hotspot device. Then the unconfigured device disconnects from the network hotspot device, then accesses the first hotspot of the next network hotspot device and sends the device information until the device information is sent to all discovered network hotspot devices.

In the scenario of a smart home, the unconfigured device can be various smart devices placed in the house.

In step 102, the one or more network hotspot devices send the received device information to a server. The server can collect the device information of multiple unconfigured devices and let the server know that there is currently a new device to be allocated to the network. During this process, the server can find that multiple network hotspot devices have reported the device information of the same unconfigured device.

The network hotspot device can also send its own MAC address to the server. The server can find an IP address of the network hotspot device according to the MAC address of the network hotspot device. so that the server can collect area information where the multiple unconfigured devices are located by determining the area where the unconfigured device is located according to the IP address of the network hotspot device.

In step 103, one or more user terminals corresponding to the one or more network hotspot devices send to the server a network configuration request message for the unconfigured device.

The user terminal corresponding to the network hotspot device refers to the user terminal connected to a hotspot of the network hotspot device. In the embodiment of the present application, the network hotspot device can send a reminder message to the user terminal corresponding to the network hotspot device to inform the user to initiate a network configuration request for the unconfigured device. The user can send the network configuration request message to the server through the user terminal to the server.

In step 104, the server determines the user terminal corresponding to the first received network configuration request message as the target user terminal and sends a network configuration response message to the target user terminal.

If the server receives a network configuration request message sent by multiple user terminals, the server determines the user terminal corresponding to the first received network configuration request message as the target user terminal and sends a network configuration response message to the target user terminal. In order to inform users to start the subsequent network operation. The server can send a request failure message to the user terminals other than the target user terminal to inform other users not to perform the network configuration operation at present, and inform the other users that they can request the network configuration again after a period of time.

In step 105, after receiving the network configuration response message, the target user terminal starts an access process for the unconfigured device to access the second hotspot of a target network hotspot device. The target network hotspot device is corresponding to the target user terminal.

In the embodiment of the present application, after receiving the network configuration response message, the target user terminal can start the access process for the unconfigured device to access the second hotspot of the target network hotspot device automatically or according to the user's operations.

The access process of the configured device to the second hotspot of the target network hotspot device can include: a network configuration process that provides the unconfigured device with access information of the second hotspot of the target network hotspot device. The access information accesses the unconfigured device to the second hotspot of the target network hotspot device, so that the unconfigured device can access the Internet.

In the embodiment of the present application, the unconfigured device can report the device information to the network hotspot device through the first hotspot provided by the network hotspot device. The first hotspot has no Internet access capability. Then the network hotspot device uploads the device information to the server. The server can determine the area where the unconfigured device is located based on the IP address information of the network hotspot device. Therefore, the server can also collect the area and device information of each unconfigured device when the unconfigured device is not networked. Through the method of the embodiment of the present application, the equipment supplier can learn in which regions the product is sold better and in which regions it is sold poorly, so as to carry out targeted promotion.

On the other hand, when one or more user terminals simultaneously initiate a network configuration request to the same unconfigured device, the server can only return a response to the first requested target user terminal, and then the target user terminal initiates the network configuration process. This avoids the situation that the device can be incorrectly connected to the wrong network hotspot device when multiple user terminals request network configuration at the same time.

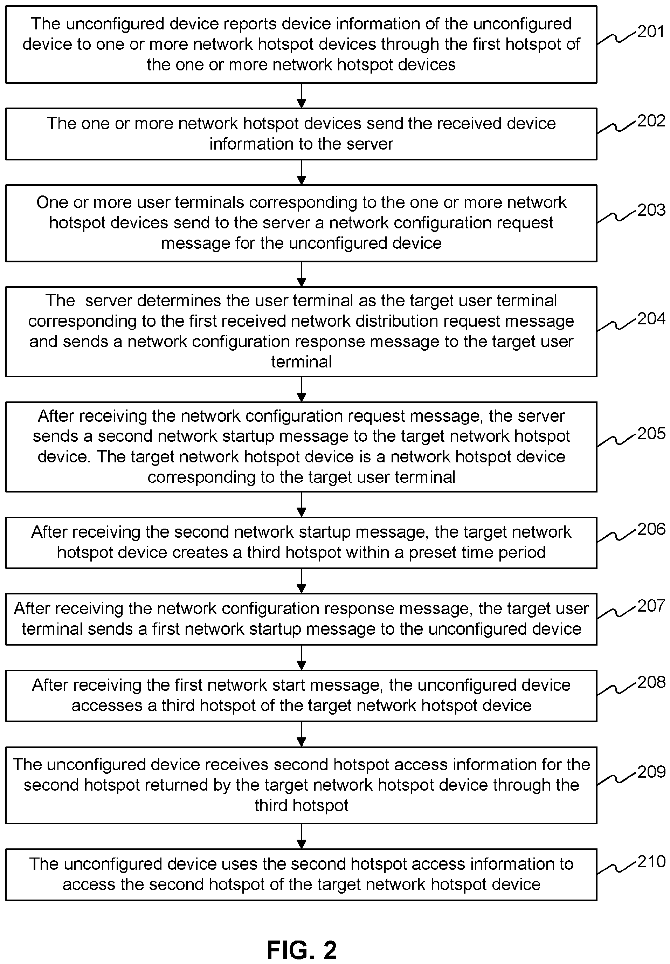

**FIG. 2** illustrates a flow chart of embodiment 2 of an exemplary method for accessing a network hotspot device by an unconfigured device of the present application. The network hotspot device creates a first hotspot and a second hotspot. The method can include the following steps.

In step 201, the unconfigured device reports its own device information to one or more network hotspot devices through the first hotspot of the one or more network hotspot devices.

The network hotspot device can be a router or an AP without routing capabilities. In the embodiment of the present application, the network hotspot device creates the first hotspot and the second hotspot after power-on. The first hotspot is a hotspot that does not have Internet access capability, and the second hotspot is a hotspot with Internet access capability. If the unconfigured device accesses the first hotspot, the unconfigured device can communicate with the network hotspot device but cannot access the Internet through the network hotspot device. If the unconfigured device accesses the second hotspot, the unconfigured device can communicate with the network hotspot device and can also access the Internet through the network hotspot device.

In the embodiment of the present application, step 201 can include the following sub-steps.

In sub-step S11, the unconfigured device uses preset first hotspot access information for the first hotspot of the one or more network hotspot devices to access the first hotspot of the one or more network hotspot devices one by one.

In the embodiment of the present application, the first hotspot access information (SSID and password) of the network hotspot device is fixed. The first hotspot access information of multiple network hotspot devices can be preset in the unconfigured device. After the unconfigured device is powered on, the preset first hotspot access information is used to discover the first hotspot. If there are multiple first hotspots, the unconfigured device is connected to the first hotspots of each network hotspot device one by one.

Specifically, the unconfigured device can use the first hotspot access information to generate an access request, and then send the access request to the network hotspot device. The network hotspot device verifies whether the access information is correct. If the access information is correct, the network hotspot device establishes a connection between the unconfigured device and the first hotspot.

In sub-step S12, after accessing the first hotspot of a network hotspot device, the unconfigured device sends its own device information to the network hotspot device. After the device information is sent, the connection is disconnected, and then the first hotspot of the next network hotspot device is connected.

In step 202, the one or more network hotspot devices send the device information to the server. The server can collect device information of multiple unconfigured devices and let the server know that there is currently a new device to be allocated to the network. During this process, the server can find that multiple network hotspot devices have reported the device information of the same unconfigured device.

The network hotspot device can also send its own MAC address to the server. The server can find an IP address of the network hotspot device according to the MAC address of the network hotspot device. so that the server can collect area information where the multiple unconfigured devices are located by determining the area where the unconfigured device is located according to the IP address of the network hotspot device.

In the embodiment of the present application, the server acquires the one or more network devices hotspots IP address information. and the server determines the region where the unconfigured device is located based on the IP address information of the one or more network hotspot devices.

The unconfigured device can report the device information to the network hotspot device through the first hotspot provided by the network hotspot device. The first hotspot does not have the ability to access the Internet. The network hotspot device uploads the device information to the server. The server can determine the area where the unconfigured device is located according to the IP address information of the network hotspot device. Therefore, the server can also collect the area and the device information of each unconfigured device when the unconfigured device has not been configured.

Through the method of the embodiment of the present application, the equipment vendor can learn in which regions the product is sold better and in which regions it is sold poorly, so as to carry out targeted promotion.

In step 203, one or more user terminals corresponding to the one or more network hotspot devices send to the server a network configuration request message for the unconfigured device.

In the embodiment of the present application, step 203 can include the following sub-steps.

In sub-step S21, the one or more user terminals send a query message of the unconfigured device to the corresponding network hotspot device.

The user terminal can send a query message of the unconfigured device to the network hotspot device to which the user terminal is connected to query whether there is a unconfigured device.

In sub-step S22, the one or more network hotspot devices generate notification information of the unconfigured device for the unconfigured device accessing the first hotspot of the network hotspot device according to the query message of the unconfigured device.

After receiving the query message from the unconfigured device, the network hotspot device determines the unconfigured device that has accessed the first hotspot of the network hotspot device. In an example, the first unconfigured device and the second unconfigured device once accessed the first hotspot of a network hotspot device. After sending device information to the network hotspot device, the first unconfigured device and the second unconfigured device disconnect from the network hotspot device. After the network hotspot device receives the query message of the unconfigured device, the network hotspot device generates notification information of the unconfigured device for the first unconfigured device and the second unconfigured device.

The network hotspot device generates notification information of the unconfigured device according to the unconfigured device and returns the notification information of the unconfigured device to the user terminal. The notification information of the unconfigured device can be a list of unconfigured devices.

In sub-step S23, the one or more user terminals receive the notification information of the unconfigured device and generate a network configuration request message for the unconfigured device according to the notification information of the unconfigured device.

The user terminal can select the unconfigured device in the received notification information of the unconfigured device. A network configuration request message is generated for the unconfigured device.

In sub-step S24, the one or more user terminals send the network configuration request message to the server.

In step 204, the server determines the user terminal as the target user terminal corresponding to the first received network configuration request message and sends a network configuration response message to the target user terminal.

If the server receives a network configuration request message sent by multiple user terminals, the server determines the user terminal as the target user terminal corresponding to the first received network configuration request message, and sends a network configuration response message to the target user terminal to inform users to start the subsequent network operation. The server can send a request failure message to user terminals other than the target user terminal to inform other users not to perform the network configuration operation at present and to request the network configuration again after a period of time.

In step 205, after receiving the network configuration request message, the server sends a second network startup message to the target network hotspot device. The target network hotspot device is a network hotspot device corresponding to the target user terminal.

After receiving the network configuration request message sent by the one or more user terminals, the server determines the target user terminal and sends a second network start message to the target network hotspot device connected to the target user terminal to inform the target network hotspot device to create a third hotspot.

When the one or more user terminals simultaneously initiate a network configuration request to the same unconfigured device, the server can return only one response to the first requested target user terminal. The target user terminal initiates the network configuration process. In this way, it can be avoided that the device can be connected to the wrong network hotspot device by mistake when multiple user terminals are configured at the same time.

In step 206, after receiving the second network startup message, the target network hotspot device creates a third hotspot within a preset time period. After a certain period of time, the target network hotspot device will turn off the third hotspot. The third hotspot of the network hotspot device is a hotspot that does not have the ability to access the Internet.

In step 207, after receiving the network configuration response message, the target user terminal sends a first network startup message to the unconfigured device. A remote control device starts the network configuration process.

In one example, after receiving the network configuration response message of the user terminal, the user can start the network configuration process in the unconfigured device. For example, a network configuration start button is set in the unconfigured device. When the start button is pressed, the unconfigured device starts the network configuration process.

In step 208, after receiving the first network start message, the unconfigured device accesses a third hotspot of the target network hotspot device.

After receiving the first configuration network start message, the unconfigured device starts the network configuration process. In the network configuration process, the unconfigured device first accesses the third hotspot of the target network hotspot device.

In the embodiment of the present application, step 208 can include the following sub-steps.

In sub-step S31, the unconfigured device uses the preset third hotspot access information for the third hotspot of the target network hotspot device to access the third hotspot of the target network hotspot device.

In the embodiment of the present application, the third hotspot access information of the network hotspot device is fixed. The third hotspot access information of multiple network hotspot devices can be preset in the unconfigured device. The network hotspot device can use the preset third hotspot access information to access the third hotspot of the target network hotspot device.

Specifically, the unconfigured device can use the third hotspot access information to generate an access request, and then send the access request to the network hotspot device. The network hotspot device verifies whether the access information is correct, and if it is correct, the network hotspot device establishes a connection between the unconfigured device and the third hotspot.

In step 209, the unconfigured device receives second hotspot access information for the second hotspot returned by the target network hotspot device through the third hotspot.

After the unconfigured device accesses the third hotspot of the target network hotspot device, the network hotspot device returns second hotspot access information for the second hotspot to the unconfigured device.

The second hotspot access information includes an SSID and a password. The SSID is fixed, and the password can be dynamically changed.

In step 210, the unconfigured device uses the second hotspot access information to access the second hotspot of the target network hotspot device.

After receiving the access information of the second hotspot, the unconfigured device disconnects from the third hotspot, then use the second hotspot access information to access the second hotspot of the target network hotspot device. After the network equipment is connected to the second hotspot, the second hotspot can be used to access the Internet.

The unconfigured device can use the second hotspot access information to generate an access request, and then send the access request to the network hotspot device. The network hotspot device verifies whether the access information is correct, and if it is correct, the network hotspot device establishes a connection between the device to be configured and the second hotspot.

In the embodiment of the present application, the second hotspot access information is returned to the unconfigured device by the network hotspot device, without requiring the user to manually input the access information to the unconfigured device, which simplifies the user's operation and improves the user experience.

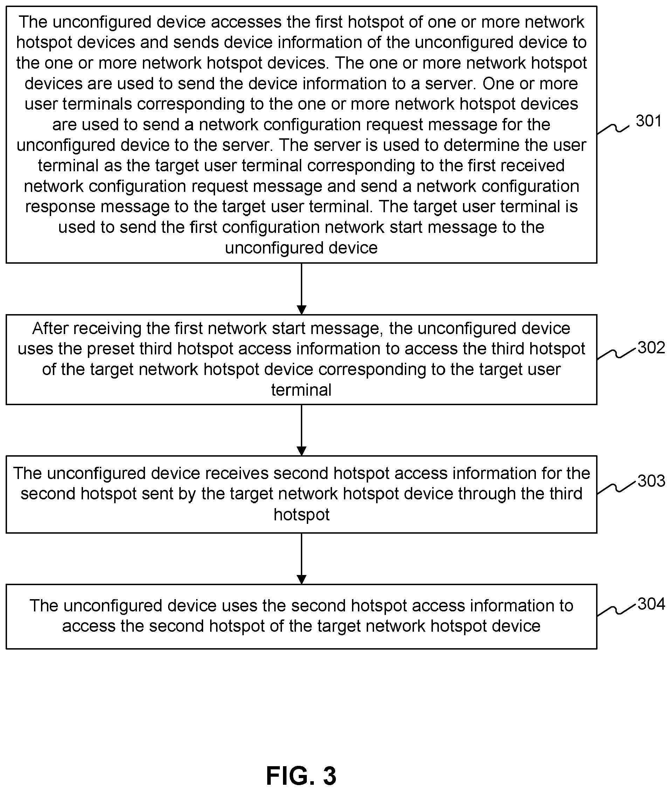

**FIG. 3** illustrates a flow chart of embodiment 3 of an exemplary method for accessing a network hotspot device by an unconfigured device of the present application. The network hotspot device creates a first hotspot and a second hotspot. The method can include the following steps.

In step 301, the unconfigured device accesses the first hotspot of one or more network hotspot devices and sends its own device information to the one or more network hotspot devices. The one or more network hotspot devices are used to send the device information to a server. One or more user terminals corresponding to the one or more network hotspot devices are used to send a network configuration request message for the unconfigured device to the server. The server is used to determine the user terminal as the target user terminal corresponding to the first received network configuration request message and send a network configuration response message to the target user terminal. The target user terminal is used to send the first configuration network start message to the unconfigured device.

In the embodiment of the present application, the network hotspot device can be a router or an AP without a routing function. The network hotspot device creates the first hotspot and the second hotspot after power-on. The first hotspot is a hotspot that does not have Internet access capability, and the second hotspot is a hotspot with Internet access capability.

The unconfigured device can use preset one or more first hotspot access information for one or more network hotspot devices to access the first hotspot of one or more network hotspot devices one by one. After accessing the first hotspot of a network hotspot device, the unconfigured device sends its own device information to the network hotspot device.

In step 302, after receiving the first network start message, the unconfigured device uses the preset third hotspot access information to access the third hotspot of the target network hotspot device. The target network hotspot device is corresponding to the target user terminal.

In the embodiment of the present application, after receiving the network configuration request message, the server sends a second network startup message to the target network hotspot device. After receiving the second network startup message, the network hotspot device creates a third hotspot within a preset time period.

The third hotspot access information of the network hotspot device is fixed. The third hotspot access information of multiple network hotspot devices can be preset in the unconfigured device. The network hotspot device can use the preset third hotspot access information to access the third hotspot of the target network hotspot device.

In step 303, the unconfigured device receives second hotspot access information for the second hotspot sent by the target network hotspot device through the third hotspot.

After the unconfigured device accesses the third hotspot of the target network hotspot device, the network hotspot device returns second hotspot access information for the second hotspot to the unconfigured device.

In step 304, the unconfigured device uses the second hotspot access information to access the second hotspot of the target network hotspot device.

After receiving the access information of the second hotspot, the unconfigured device disconnects from the third hotspot, then uses the second hotspot access information to access the second hotspot of the target network hotspot device. After the network equipment is connected to the second hotspot, the second hotspot can be used to access the Internet.

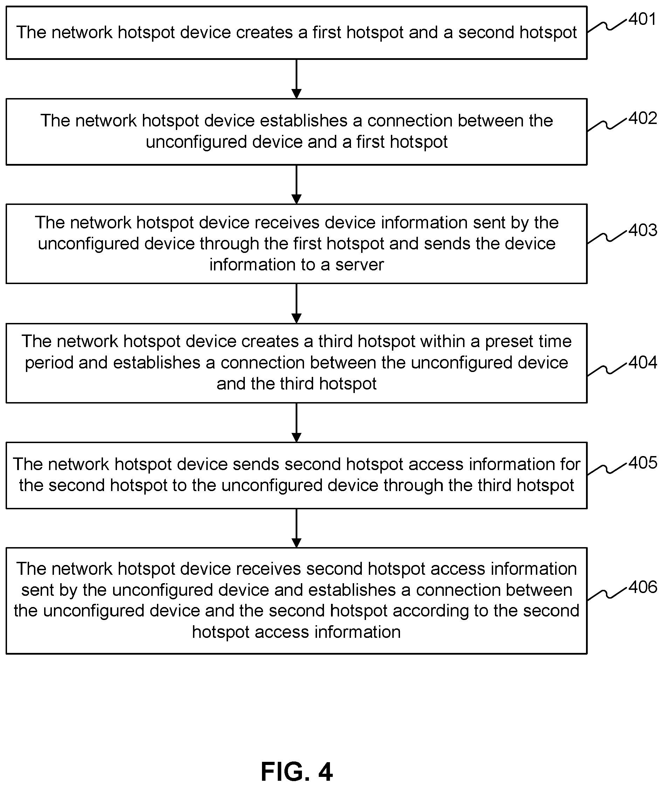

**FIG. 4** illustrates a flow chart of embodiment 4 of an exemplary method for accessing a network hotspot device by an unconfigured device of the present application. The method may specifically include the following steps.

In step 401, the network hotspot device creates a first hotspot and a second hotspot.

The network hotspot device can be a router or an AP without routing capabilities. The network hotspot device creates the first hotspot and the second hotspot after power-on. The first hotspot is a hotspot that does not have Internet access capability, and the second hotspot is a hotspot with Internet access capability.

In step 402, the network hotspot device establishes a connection between the unconfigured device and a first hotspot.

The first hotspot access information of the network hotspot device can be preset in the unconfigured device. After the unconfigured device is powered on, the preset first hotspot access information is used to discover the first hotspot.

The unconfigured device can use the first hotspot access information to generate an access request, and then send the access request to the network hotspot device. The network hotspot device verifies whether the access information is correct, and if it is correct, the network hotspot device establishes a connection between the unconfigured device and the first hotspot.

In step 403, the network hotspot device receives device information sent by the unconfigured device through the first hotspot and sends the device information to a server.

After accessing the first hotspot of a network hotspot device, the unconfigured device sends its own device information to the network hotspot device and disconnects the connection after sending the device information. The network hotspot device sends the received device information to the server, so that the server can collect device information of multiple unconfigured devices and can become informed that there is currently a new unconfigured device.

The network hotspot device can also send its own MAC address to the server. The server can find the IP address of the network hotspot device according to the MAC address of the network hotspot device. According to the IP address of the network hotspot device, the area where the unconfigured device is located is determined so that the server can collect the area information of multiple unconfigured devices.

In step 404, the network hotspot device creates a third hotspot within a preset time period and establishes a connection between the unconfigured device and the third hotspot.

In the embodiment of the present application, the user terminal connected to the network hotspot device can send a query message of the unconfigured device to the network hotspot device to query whether there is an unconfigured device.

After the network hotspot device receives the query message of the unconfigured device, the network hotspot device determines that a device that has been connected to the first hotspot of the network hotspot device is the unconfigured device. The network hotspot device generates the notification information of the unconfigured device and returns the notification information of the unconfigured device to the user terminal.

The user terminal can select the unconfigured device in the received notification information of the unconfigured device. The user terminal generates a network configuration request message for the unconfigured device that requires network configuration, and then sends the network configuration request message to the server.

After receiving the network configuration request message, the server returns a network configuration response message to the user terminal. At the same time, the server also sends a second network configuration request message to the network hotspot device. After receiving the second network configuration request message, the network hotspot device creates a third hotspot within a preset time period.

After receiving the network configuration response message, the user terminal sends a first network configuration start message to the unconfigured device. After receiving the first network configuration request message, the unconfigured device uses the preset third hotspot access information to request access to the third hotspot of the network hotspot device. The network hotspot device establishes a connection between the unconfigured device and the third hotspot according to the third hotspot access information sent by the unconfigured device.

In step 405, the network hotspot device sends second hotspot access information for the second hotspot to the unconfigured device through the third hotspot.

The network hotspot device returns the second hotspot access information for the second hotspot to the unconfigured device.

In step 406, the network hotspot device receives second hotspot access information sent by the unconfigured device and establishes a connection between the unconfigured device and the second hotspot according to the second hotspot access information.

The unconfigured device uses the received second hotspot access information to request access to the second hotspot of the network hotspot device. The network hotspot device establishes a connection between the unconfigured device and the second hotspot according to the second hotspot access information sent by the unconfigured device.

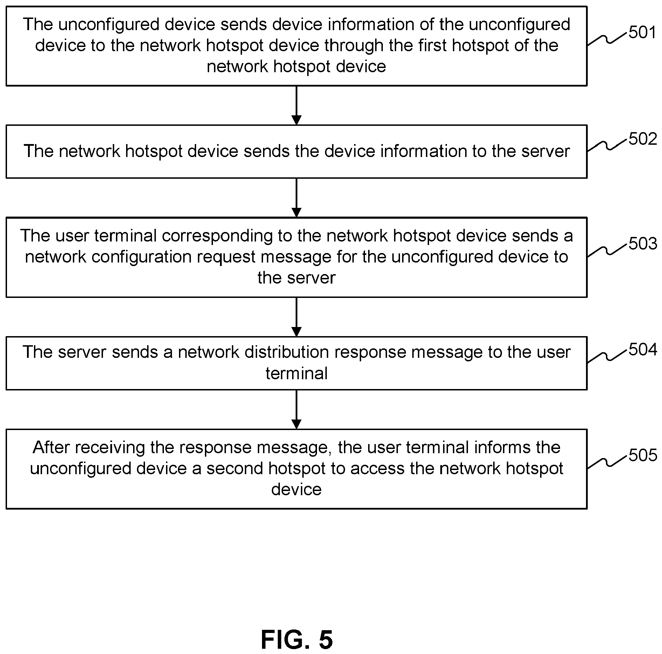

**FIG. 5** illustrates a flow chart of embodiment 5 of an exemplary method for accessing a network hotspot device by an unconfigured device of the present application. The network hotspot device has a first hotspot and a second hotspot. The method can include the following steps.

In step 501, the unconfigured device sends its own device information to the network hotspot device through the first hotspot.

The network hotspot device can be a router or an AP without routing capabilities. In the embodiment of the present application, the network hotspot device creates the first hotspot and the second hotspot after power-on. The first hotspot is a hotspot that does not have Internet access capability, and the second hotspot is a hotspot with Internet access capability.

In the embodiment of the present application, step 501 can include the following sub-steps.

In sub-step S41, the unconfigured device uses the preset first hotspot access information for the first hotspot of the network hotspot device to access the first hotspot of the network hotspot device.

In sub-step S42, after accessing the first hotspot of the network hotspot device, the unconfigured device sends its own device information to the network hotspot device.

In step 502, the network hotspot device sends the device information to the server.

In step 503, the user terminal corresponding to the network hotspot device sends a network configuration request message for the unconfigured device to the server.

In the embodiment of the present application, step 503 can include the following sub-steps.

In sub-step S51, the user terminal sends a query message of the unconfigured device to the corresponding network hotspot device.

In sub-step S52, the network hotspot device generates, according to the query message of the unconfigured device, a notification message of the unconfigured device that accesses the first hotspot of the network hotspot device.

In sub-step S53, the user terminal receives the notification information of the unconfigured device and generates a network configuration request message for the unconfigured device according to the notification information of the unconfigured device.

In sub-step S54, the user terminal sends the network configuration request message to the server.

In step 504, the server sends a network configuration response message to the user terminal.

In step 505, after receiving the response message, the user terminal informs the unconfigured device a second hotspot to access the network hotspot device.

In the embodiment of the present application, step 505 can include the following sub-steps.

In sub-step S61, after receiving the network configuration response message, the user terminal sends a first network startup message to the unconfigured device.

In sub-step S62, after receiving the first configuration network start message, the unconfigured device accesses a third hotspot of the network hotspot device.

In the embodiment of the present application, the third hotspot is a hotspot that does not have Internet access capability.

In the embodiment of the present application, sub-step S62 can further include that the unconfigured device uses preset third hotspot access information for the third hotspot of the network hotspot device to access the third hotspot of the network hotspot device.

In sub-step S63, the unconfigured device receives second hotspot access information for the second hotspot returned by the network hotspot device through the third hotspot.

In sub-step S64, the unconfigured device uses the second hotspot access information to access the second hotspot of the network hotspot device.

In the embodiment of the present application, the method may further include:, after receiving the network configuration request message, the server sends a second network startup message to the network hotspot device. After receiving the second network start message, the network hotspot device creates a third hotspot within a preset time period.

In the embodiment of the present application, the method may further include:, the server obtains the IP address information of the network hotspot device. The server determines the area where the unconfigured device is located based on the IP address information of the network hotspot device.

In the embodiment of the present application, the unconfigured device can report the device information to the network hotspot device through the first hotspot provided by the network hotspot device and having no Internet access capability, and the network hotspot device uploads the device information to the server. The server can determine the area where the unconfigured device is located based on the IP address information of the network hotspot device. Therefore, the server can also collect the area and device information of each unconfigured device when the unconfigured device is not networked. Through the method of the embodiment of the present application, equipment suppliers can learn in which regions the product is sold better and in which regions it is sold poorly, so as to carry out targeted promotion.

On the other hand, when one or more user terminals simultaneously initiate a network configuration request to the same unconfigured device, the server can only return a response to the first requested target user terminal, and then the target user terminal initiates the network configuration process. This avoids the situation that the device can be incorrectly connected to the wrong network hotspot device when multiple user terminals request network configuration at the same time.

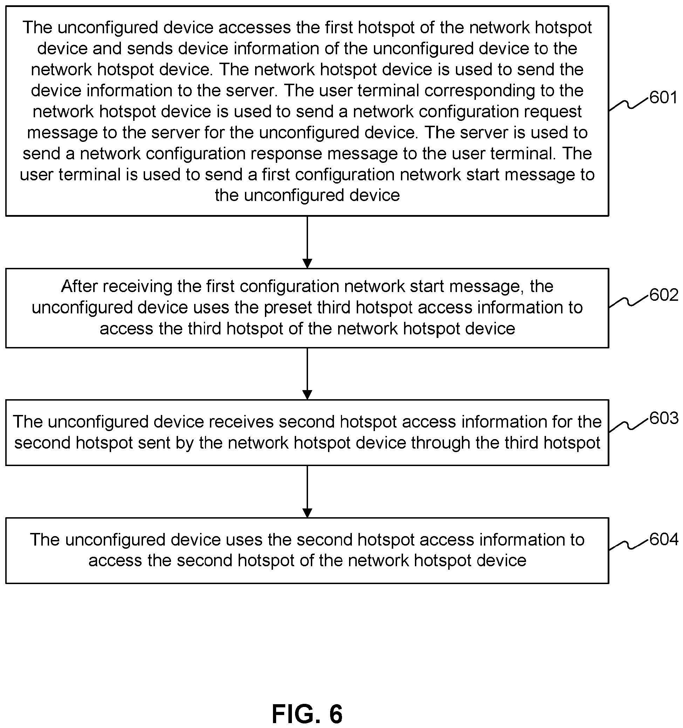

**FIG. 6** illustrates a flow chart of embodiment 6 of an exemplary method for accessing a network hotspot device by an unconfigured device of the present application. The network hotspot device has a first hotspot and a second hotspot. The method can include the following steps.

In step 601, the unconfigured device accesses the first hotspot of the network hotspot device and sends device information of the unconfigured device to the network hotspot device. The network hotspot device is used to send the device information to the server. The user terminal corresponding to the network hotspot device is used to send a network configuration request message to the server for the unconfigured device. The server is used to send a network configuration response message to the user terminal. The user terminal is used to send a first configuration network start message to the unconfigured device.

In the embodiment of the present application, the network hotspot device can be a router or an AP without a routing function. The network hotspot device creates the first hotspot and the second hotspot after power-on. The first hotspot is a hotspot that does not have Internet access capability, and the second hotspot is a hotspot with Internet access capability.

In step 602, after receiving the first configuration network start message, the unconfigured device uses the preset third hotspot access information to access the third hotspot of the network hotspot device.

In the embodiment of the present application, after receiving the network configuration request message, the server sends a second network startup message to the target network hotspot device. After receiving the second network startup message, the network hotspot device creates a third hotspot during a preset time period.

The third hotspot access information of the network hotspot device is fixed. The third hotspot access information of multiple network hotspot devices can be preset in the unconfigured device. The network hotspot device can use the preset third hotspot access information to access the third hotspot of the target network hotspot device.

In step 603, the unconfigured device receives second hotspot access information for the second hotspot sent by the network hotspot device through the third hotspot.

After the unconfigured device accesses the third hotspot of the target network hotspot device, the network hotspot device returns second hotspot access information for the second hotspot to the unconfigured device.

In step 604, the unconfigured device uses the second hotspot access information to access the second hotspot of the network hotspot device.

After receiving the access information of the second hotspot, the unconfigured device disconnects from the third hotspot, then uses the second hotspot access information to access the second hotspot of the target network hotspot device. After the network equipment is connected to the second hotspot, the second hotspot can be used to access the Internet.

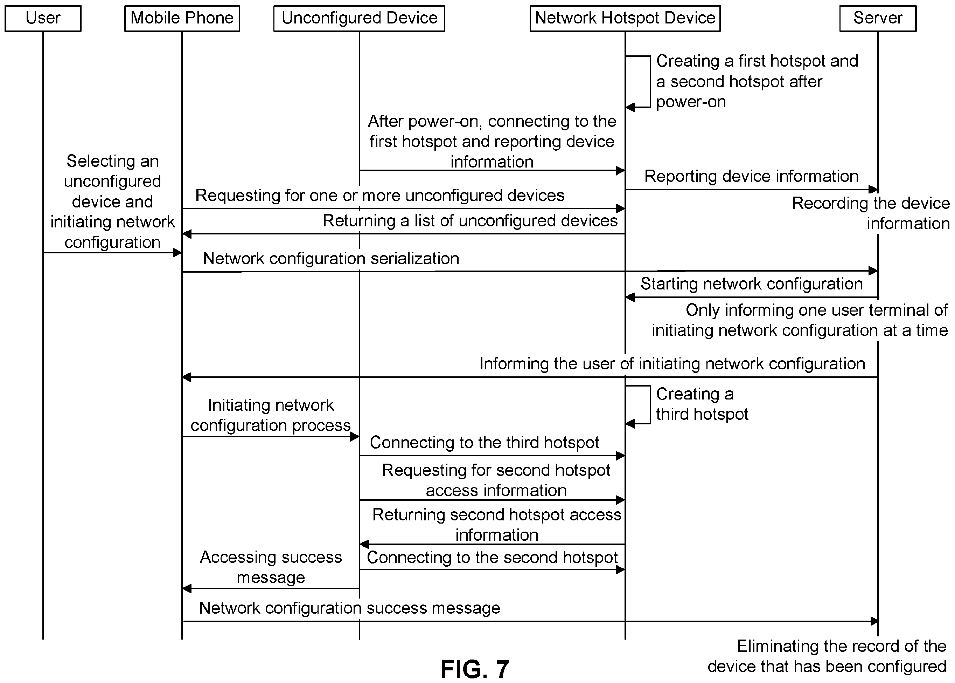

**FIG. 7** illustrates a flow chart of an exemplary method for accessing a network hotspot device by an unconfigured device of the present application.

The network hotspot device can be a router or an AP without routing capabilities. The network hotspot device can create a first hotspot and a second hotspot after power-on. The first hotspot is a hotspot that does not have Internet access capability, and the second hotspot is a hotspot with Internet access capability. An SSID and a password of the first hot spot are fixed.

A firmware of the unconfigured device presets the SSID and the password of the first hotspot. The unconfigured device is connected to the first hotspot of the network hotspot device using the SSID and the password after power-on. If the unconfigured device discovers multiple first hotspots, the unconfigured device connects to each first hotspot one by one. The unconfigured device notifies device model and MAC address information of the unconfigured device to the network hotspot device where one first hotspot is located. Then the unconfigured device disconnects to the above-mentioned first hotspot and connects to the next first hotspot until all supported network hotspot devices are aware of the existence of the unconfigured device.

After the network hotspot devices learn the device information of the unconfigured device, the network hotspot devices report the models, MAC addresses, router identifiers (e.g., router MAC addresses) to the server such that the server is informed about the existence of the unconfigured device. The server records the device information of the unconfigured device. In this process, the server may find that multiple network hotspot devices report discovery of the same unconfigured device.

When a user opens a mobile App, the App can inquire the network hotspot device with which the App is connected whether an unconfigured device exists. The network hotspot device can return a list of unconfigured devices with which the network hotspot device is connected to the mobile App.

After the user receives the list of unconfigured devices, the user can select initiating network configuration for an unconfigured device. Then a network configuration serialization process is initiated.

Suppose user 1 and neighbor user 2 both have bought devices of the same model (named device 1 and device 2). After device 1 and device 2 are powered on, both device 1 and device 2 can report their own model and MAC information to network hotspot devices of user 1 and user 2. Therefore the Apps of both user 1 and user 2 will display two unconfigured devices. But the users probably do not know which one is their own device. Therefore, the users probably select one device for network configuration randomly. It is likely that user 1 initiates network configuration for device 2 while user 2 initiates network configuration for device 1, then it will occur that device 1 is connected to the network hotspot device of user 2 while device 2 is connected to the network hotspot device of user 1.

When user 1 initiates network configuration, user 1 sends a network configuration request message to the server from the mobile phone of user 1. The network configuration request message is used to send the information of all the devices of the same model found by the network hotspot device of user 1 to the server no matter which device user 1 has chosen and inform the server that no network configuration request is allowed from other users for these devices.

Therefore, if user 2 initiates network configuration, when user 2's mobile App request arrives at the server, the server determines that the device is currently being processed by another user for network configuration, will immediately return a configuration network failure message to user 2, and inform the user 2 to wait for a period of time (e.g., 60 seconds) and try the network configuration again.

The server then sends a second configuration network start message to the first network hotspot device connected to the user who initiated the network configuration to inform the network hotspot device to start the network configuration. The hotspot device that receives a second network configuration start message will create a third hotspot (the SSID and the password of the hotspot are fixed). The third hotspot will last for a period of time (60 seconds) before closing.

The server will also send a network configuration response message to the mobile phone of the user who started the network configuration, and then the mobile phone App will prompt the user to initiate the network configuration process on the device. In one example, the device side will have a button to start the device side of the network configuration. The user presses the network configuration device button to start the network configuration. In another example, the mobile phone can send a first network configuration start message to the device. After receiving the first network configuration start message, the device starts the network configuration process.

After the network configuration starts, the unconfigured device connects to the preset third hotspot of the network hotspot device using the SSID and the password of the preset third hotspot.

The network hotspot device determines that the model of the device requesting network configuration is the unconfigured device that the network hotspot device wishes to configure and sends the SSID and the password of the second hotspot to the unconfigured device.

After the unconfigured device receives the SSID and the password of the second hotspot, the unconfigured device connects to the second hotspot of the network hotspot device.

After the unconfigured device is connected to the second hotspot, unconfigured device will notify the mobile phone APP that the unconfigured device has connected to the second hotspot.

The mobile APP will notify the server that the network configuration is successful.

After the server knows that the unconfigured device is successfully configured, the server clears the record of the device that has been configured.

In the embodiment of the present application, the unconfigured device can report the device information to the network hotspot device through the first hotspot (without the ability to access the Internet) provided by the network hotspot device. The network hotspot device uploads the device information to the server. The server can determine the area where the unconfigured device is located according to the IP address information of the network hotspot device. Therefore, the server can collect the area and device information of each unconfigured device when the unconfigured device is not equipped with a network. Through the method of the embodiment of the present application, the equipment suppliers can learn in which regions products are sold better and in which regions the products are sold poorly, so as to carry out targeted promotion.

When one or more user terminals initiate a network configuration request to the same unconfigured device at the same time, the server only returns a response to the target user terminal of the first request, and the target user terminal initiates the network configuration process. This avoids the situation that the device is incorrectly connected to the wrong network hotspot device when multiple user terminals configure the network at the same time.

In the embodiment of the present application, the second hotspot access information is returned by the network hotspot device to the unconfigured device, without the user manually inputting the access information to the unconfigured device, which simplifies user operations and improves user experience.

It should be noted that, for simplicity of description, the method embodiments are expressed as a series of action combinations, but those skilled in the art should be aware that the embodiments of the present application are not limited by the described action orders, because according to the embodiments of the present application, some steps may be performed in other orders or simultaneously. Secondly, those skilled in the art should also know that the embodiments described in the specification are all preferred embodiments, and the actions involved are not necessarily required by the embodiments of the present application.

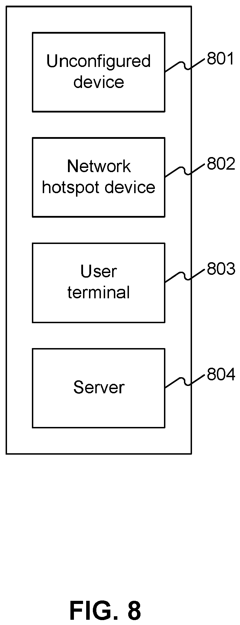

**FIG. 8** illustrates a schematic diagram of an exemplary system for accessing a network hotspot by an unconfigured device. The system can include an unconfigured device 801, a network hotspot device 802, a user terminal 803 corresponding to network hotspot device 802, and a server 804.

Network hotspot device 802 is used to create a first hotspot and a second hotspot.

Unconfigured device 801 is used to report device information of the unconfigured device 801 to network hotspot device 802 via the first hotspot of network hotspot device 802.

Network hotspot device 802 is also used to send the device information of unconfigured device 801 to server 804.

User terminal 803 corresponding to network hotspot device 802 is used to send a network configuration request message for unconfigured device 801 to server 804.

Server 804 is used to determine the user terminal corresponding to the first received network configuration request message as a target user terminal and send a network configuration response message to the target user terminal.

The target user terminal in user terminal 803 is used to start the access process of the second hotspot of the target network hotspot device by unconfigured device 801 after receiving the network configuration response message. The target network hotspot device is a network hotspot device corresponding to the target user terminal.

In the embodiment of the present application, unconfigured device 801 is further used to use preset first hotspot access information for network hotspot devices 802 to access the first hotspots of the network hotspot devices 802 one by one. After accessing the first hotspot of hotspot network device 802, unconfigured device 801 sends its device information to network hotspot device 802.

In the embodiment of the present application, user terminal 803 is also used to send a query message of the unconfigured device to corresponding network hotspot device 802.

Network hotspot device 802 is further used to generate, according to the query message of the unconfigured device, a notification message of unconfigured device 801 corresponding to the first hotspot of the network hot-spot device 802.

User terminal 803 is further used to receive the notification information of the unconfigured device and generate a network configuration request message for unconfigured device 801 according to the notification information of the unconfigured device. The message is sent to the server 804.

In the embodiment of the present application, the target user terminal is further used to send a first network start message to unconfigured device 801 after receiving the network configuration response message.

Unconfigured device 801 is further used to access a third hotspot of the target network hotspot device after receiving the first network start message, receive the second hotspot access information for the second hotspot via the third hotspot of the target network hotspot device, and utilize the second hotspot access information to access the second hotspot of the target network hotspot device.

In the embodiment of the present application, server 804 is further used to send a second network start message to the target network hotspot device after receiving the network request message.

The target network hotspot device in the network hotspot device 802 is used to create a third hotspot within a preset time period after receiving the second network start message.

In the embodiment of the present application, unconfigured device 801 is further used to use preset third hotspot access information for the third hotspot of the target network hotspot device to access the third hotspot of the target hotspot device.

In the embodiment of the present application, server 804 is further used to send a network configuration failure message to user terminals other than the target user terminal.

In the embodiment of the present application, server 804 is further used to obtain IP address information of the hotspot network device 802 and determine a region where unconfigured device 801 is located according to the IP address information of the hotspot network device.

In the embodiment of the present application, the first hotspot does not have Internet access capability, and the second hotspot has Internet access capability.

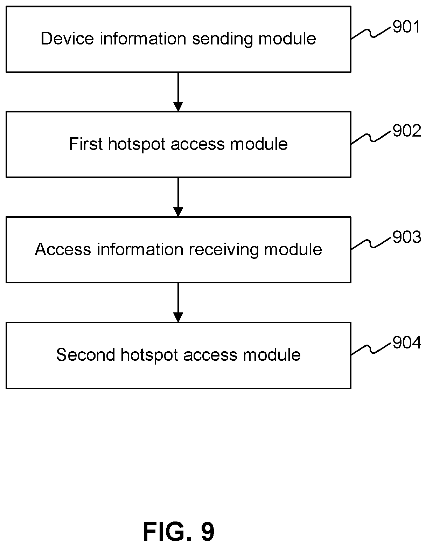

**FIG. 9** illustrates a schematic diagram of embodiment 1 of an exemplary apparatus for accessing a network hotspot by an unconfigured device. The hotspot network device can have a first and a second hot hotspot. The apparatus can include the following modules: a device information sending module 901 used to access a first hotspot of one or more network hotspot devices, and send its own device information to the one or more network hotspot devices; one or more network hotspot devices used to send the device information to the server; one or more user terminals corresponding to the one or more network hotspot devices used to initiate a network configuration request message to the server for the unconfigured device; the server used to determine the user terminal corresponding to the first received network configuration request message as the target user terminal and send the network configuration response message to the target user terminal; the target user terminal used to send a first configuration network start message to the unconfigured device;

First hotspot access module 902 used to use preset third hotspot access information to access the third hotspot of the target network hotspot device after receiving the first configuration network start message; the target network hotspot device being a network hotspot device corresponding to the target user terminal;

Access information receiving module 903used to receive second hotspot access information for the second hotspot sent by the third hotspot of the target network hotspot device;

Second hotspot access module 904 used to use the second hotspot access information to access the second hotspot of the target network hotspot device.

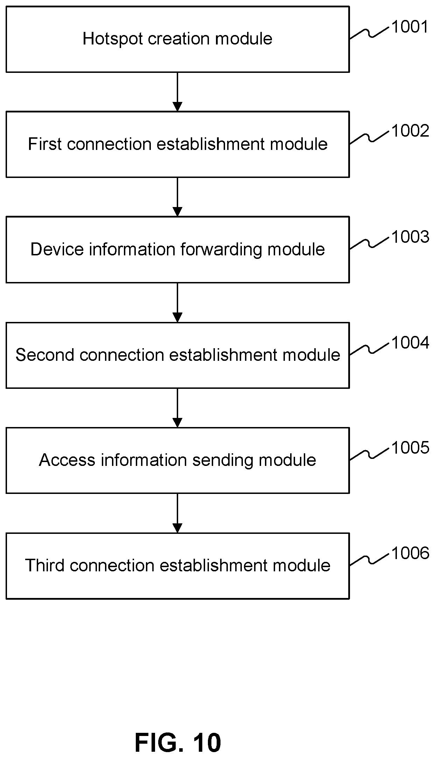

**FIG. 10** illustrates a schematic diagram of embodiment 2 of an exemplary apparatus for accessing a network hotspot by an unconfigured device of the present application. The apparatus can specifically include the following modules:
A hotspot creation module 1001, located in the network hotspot device, used to create a first hotspot and a second hotspot;

First connection establishment module 1002 located in the network hotspot device , used to establish a connection between the unconfigured device and the first hotspot.
Device information forwarding module 1003, located in the network hotspot device, used to receive device information sent by the unconfigured device through the first hotspot and send the device information to a server;
Second connection establishment module 1004located in the network hotspot device used to create a third hotspot within a preset time period and to establish a connection between the unconfigured device and the third hotspot;
Access information sending module 1005located in the network hotspot device used to send second hotspot access information for the second hotspot to the unconfigured device through the third hotspot;

Third connection establishment module 1006located in the network hotspot device used to receive second hotspot access information sent by the unconfigured device and establish a connection between the unconfigured device and the second hotspot according to the second hotspot access information.

The present application also discloses a system for accessing a network hotspot by an unconfigured device. The system may specifically include: a unconfigured device, a network hotspot device, a user terminal corresponding to the network hotspot device and a server. The network hotspot is used to create a first hotspot and a second hotspot, the unconfigured device is used to report its own device information to the network hotspot device through the first hotspot of the network hotspot device, the network hotspot device is also used to send the device information to the server, the user terminal is used to send a configuration request for the unconfigured device to the server, the server is used to send a configuration response message to the user terminal, and the user terminal is further used to start an access process of the unconfigured device for the second hotspot of the network hotspot device after receiving the configuration response message.

In the embodiment of the present application, the unconfigured device is further used to access the first hotspot of the network hotspot device by using preset first hotspot access information for the first hotspot of the network hotspot device, send its own device information to the network hotspot device after accessing the first hotspot of the network hotspot device.

In the embodiment of the present application, the user terminal is also used to send a query message of the unconfigured device to the corresponding network hotspot device.

The network hotspot device is also used to generate an unconfigured device notification message for the unconfigured device for accessing the first hotspot of the network hotspot device based on an unconfigured device query message.

The user terminal is further used to receive the unconfigured device notification message and generate a configuration request for the unconfigured device based on the unconfigured device notification message and send the configuration request to the server.

In the embodiment of the present application, the user terminal is further configured to, after receiving a network configuration response message, send a first network startup message to the device to the unconfigured device.

The unconfigure device is also used to access the third hotspot of the network hotspot device after receiving the first network start message, to receive the second hotspot access information for the second hotspot returned by the network hotspot device through the third hotspot, to use the second hotspot access information to access the second hotspot of the network hotspot device.

In the embodiment of the present application, the server is further used to send a second network configuration startup message to the network hotspot device after receiving the configuration request, and the network hotspot device is also used to create a third hotspot within a preset period of time after receiving the second network configuration startup message.

In the embodiment of the present application, the unconfifugred device is further used to access the third hotspot of the network hotspot device by using preset third hotspot access information for the third hotspot of the network hotspot device. In the embodiment of the present application, the server is used to obtain the device hotspot network IP address information and to determine a region where the unconfigured device is located. the embodiment of the present application, the first hotspot is a hotspot that does not have Internet access capability, and the second hotspot is a hotspot with Internet access capability.
The present application also discloses an embodiment of an apparatus for accessing a network hotspot device by an unconfigured device. The network hotspot device creates a first hotspot and a second hotspot. The apparatus may specifically include the following modules: a device information sending module, located in the unconfigured device, used to access a first hotspot of one or more network hotspot devices, and to send its own device information to the one or more network hotspot device; the one or more network hotspot devices used to send the device information to a server; one or more user terminals corresponding to the one or more network hotspot devices used to initiate a network configuration request message to the server for the unconfigured device; the server used to determine the user terminal corresponding to the first received network configuration request message as the target user terminal and to send the network configuration response message to the target user terminal; the target user terminal used to send a first configuration network start message to the unconfigured device;
A first hotspot access module, located in the unconfigured device, used to use preset third hotspot access information to access the third hotspot of the network hotspot device after receiving the first configuration network start message;
An access information receiving module, located in the unconfigured device, used to receive second hotspot access information for the second hotspot sent by the third hotspot of the network hotspot device;

A second hotspot access module, located in the unconfigured device, used to use the second hotspot access information to access the second hotspot of the network hotspot device.

For the device embodiment, since it is basically similar to the method embodiment, the description is relatively simple, and the relevant part can be referred to the description of the method embodiment.

An embodiment of the present application also provides an apparatus, including:
One or more processors; and
One or more machine-readable media having instructions stored thereon, when executed by the one or more processors, causes the apparatus to execute the method described in the embodiments of the present application.

An embodiment of the present application further provides one or more machine-readable media on which instructions are stored, and when executed by one or more processors, causes the apparatus to execute the method described in the embodiment of the present application.

The embodiments in this specification are described in a progressive manner. Each embodiment focuses on the differences from other embodiments, and the same or similar parts between the embodiments may refer to each other.

Those skilled in the art should understand that the embodiments of the embodiments of the present application may be provided as methods, devices, or computer program products. Therefore, the embodiments of the present application may take the form of an entirely hardware embodiment, an entirely software embodiment, or an embodiment combining software and hardware. Moreover, the embodiments of the present application may take the form of computer program products implemented on one or more computer usable storage media (including but not limited to disk storage, CD-ROM, optical storage, etc.) containing computer usable program code.

The embodiments of the present application are described with reference to the flowcharts and/or block diagrams of the method, terminal device (system), and computer program product according to the embodiments of the present application. It should be understood that each flow and/or block in the flowchart and/or block diagram and a combination of the flow and/or block in the flowchart and/or block diagram may be implemented by computer program instructions. These computer program instructions can be provided to the processor of a general-purpose computer, special-purpose computer, embedded processing machine, or other programmable data processing terminal device to produce a machine so that the instructions executed by the processor of the computer or other programmable data processing terminal devices for generating the functions specified in a block or blocks of a flowchart or a flow and/or a block diagram.

These computer program instructions may also be stored in a computer readable memory that can guide a computer or other programmable data processing terminal device to work in a specific manner, so that the instructions stored in the computer readable memory produce an article of manufacture including an instruction device. The instruction device implements the functions specified in one block or multiple blocks of the flowchart one flow or multiple flows and/or block diagrams.

These computer program instructions can also be loaded on a computer or other programmable data processing terminal device, so that a series of operation steps are performed on the computer or other programmable terminal device to generate computer-implemented processing, so that the computer or other programmable terminal device. The instructions executed on provide steps for implementing the functions specified in one block or multiple blocks of the flowchart one flow or multiple flows and/or block diagrams.

Although the preferred embodiments of the embodiments of the present application have been described, those skilled in the art can make additional changes and modifications to these embodiments once they learn the basic inventive concept. Therefore, the appended claims are intended to be interpreted as including the preferred embodiments and all changes and modifications falling within the scope of the embodiments of the present application.

Finally, it should be noted that in this article, relational terms such as first and second are used only to distinguish one entity or operation from another entity or operation, and do not necessarily require or imply that there are any such actual relationship or order between these entities and operations. Moreover, the terms "include", "contain" or any other variant thereof are intended to cover non-exclusive inclusion, so that a process, method, article or terminal device that includes a series of elements includes not only those elements, but also those not explicitly listed. The other elements listed may also include elements inherent to such processes, methods, articles or terminal equipment. Without more restrictions, the element defined by the sentence "include one ..." does not exclude that there are other identical elements in the process, method, article, or terminal device that includes the element.

The above describes a method for accessing a network hotspot device by an unconfigured device, an apparatus for accessing a network hotspot device by an unconfigured device, and a system for accessing a network hotspot device by an unconfigured device provided by the present application in detail. This article uses specific examples to explain the principles and implementation of this application. The descriptions of the above embodiments are only used to help understand the method and core ideas of this application. At the same time, for those of ordinary skill in the art, according to the idea of the present application, there will be changes in the specific implementation and application scope. In summary, the content of this specification should not be understood as a limitation to the present application.

## Claims

1. A method for accessing a network hotspot device by an unconfigured device, in which the network hotspot device creates a first hotspot and a second hotspot of one or more network hotspot devices, wherein the first hotspot is a hotspot that does not have Internet accessing capability, and the second hotspot is a hotspot capable of accessing the Internet, the method comprising:
reporting, by the unconfigured device, its own device information to the one or more network hotspot devices through the first hotspot of the one or more network hotspot devices;
sending, by the one or more network hotspot devices, the device information to a server;
sending, by one or more user terminals corresponding to the one or more network hotspot devices, a configuration request for the unconfigured device to the server, wherein a user terminal corresponding to a network hotspot device is a user terminal connected to a hotspot of the network hotspot device;
setting, by the server, a user terminal of which the configuration request is first received by the server as a target user terminal and sending a configuration response message to the target user terminal; and
initiating, by the target user terminal, an access process of the unconfigured device for the second hotspot of a target network hotspot device after receiving the configuration response message, wherein the target network hotspot device is a network hotspot device having a hotspot to which the target user terminal is connected.

2. The method of claim 1, wherein the step of reporting by the unconfigured device, its own device information to the one or more network hotspot devices through the first hotspot of the one or more network hotspot devices for sending the device information to the server, comprises:
accessing, by the unconfigured device, the first hotspots of network hotspot devices one by one using first hotspot access information of the first hotspot of each network hotspot device; and
sending, by the unconfigured device, its own device information to the network hotspot device through the first hotspot of a network hotspot device.

3. The method of claim 1, wherein the step of sending, by one or more user terminals corresponding to the one or more network hotspot devices, a configuration request for the unconfigured device to the server, comprises:
sending, by the one or more user terminals, an unconfigured device query message to the corresponding network hotspot device;
generating, by the one or more network hotspot devices, an unconfigured device notification message for the unconfigured device for accessing the first hotspot of the network hotspot device based on the unconfigured device query message, and
receiving, by the one or more user terminals, the unconfigured device notification message and generating the configuration request for the unconfigured device based on the unconfigured device notification message; and
sending, by the one or more user terminals, the configuration request to the server.

4. The method of claim 1, wherein the step of initiating, by the target user terminal, an access process of the unconfigured device for the second hotspot of a target network hotspot device after receiving the configuration response message, comprises:
sending, by the target user terminal, a first network configuration startup message to the unconfigured device after receiving the configuration response message;
accessing, by the unconfigured device, a third hotspot of the target network hotspot device after receiving the first network configuration startup message, wherein the third hotspot is a hotspot that does not have Internet accessing capability;
receiving, by the unconfigured device, second hotspot access information of a second hotspot sent by the third hotspot of the target network hotspot device; and
accessing, by the unconfigured device, the second hotspot of the target network hotspot device using the second hotspot access information.

5. The method of claim 4, further comprising:
sending, by the server, a second network configuration startup message to the target network hotspot device after receiving the configuration request; and
generating, by the target network hotspot device, a third hotspot within a preset period of time after receiving the second network configuration startup message.

6. The method of claim 4, wherein the step of accessing by the unconfigured device, the third hotspot of the target network hotspot device after receiving the first network configuration start message, comprises:
accessing, by the unconfigured device, the third hotspot of the target network hotspot device using third hotspot access information of the third hotspot of the target network hotspot device.

7. The method of claim 1, further comprising:
sending, by the server, a network configuration failure message to user terminals other than the target user terminal.

8. The method of claim 1, further comprising:
obtaining, by the server, IP address information of the one or more network hotspot devices; and
determining, by the server, a region where the unconfigured device is located based on the IP address information of the one or more network hotspot devices.

9. A system for accessing a network hotspot device by an unconfigured device, the system comprising:
an unconfigured device;
one or more network hotspot devices;
one or more user terminals; and
a server;
wherein the system is configured to perform the method of any one of claims 1-8.

10. A plurality of machine-readable storage media having stored thereon instructions that, when executed by a plurality of processors of a system comprising an unconfigured device, one or more network hotspot devices, one or more user terminals and a server, cause the system to perform the method of any one of claims 1-8.

## Patentansprüche

1. Verfahren zum Zugriff auf eine Netzwerk-Hotspot-Vorrichtung durch eine nicht konfigurierte Vorrichtung, bei dem die Netzwerk-Hotspot-Vorrichtung einen ersten Hotspot und einen zweiten Hotspot von einer oder mehreren Netzwerk-Hotspot-Vorrichtungen erstellt, wobei der erste Hotspot ein Hotspot ist, der keine Internetzugriffsfähigkeit aufweist, und der zweite Hotspot ein Hotspot ist, der auf das Internet zugreifen kann, wobei das Verfahren umfasst:
Melden, durch die nicht konfigurierte Vorrichtung, ihrer eigenen Vorrichtungsinformationen an die eine oder mehreren Netzwerk-Hotspot-Vorrichtungen über den ersten Hotspot der einen oder mehreren Netzwerk-Hotspot-Vorrichtungen;
Senden der Vorrichtungsinformationen an einen Server durch die eine oder mehreren Netzwerk-Hotspot-Vorrichtungen;
Senden einer Konfigurationsanforderung für die nicht konfigurierte Vorrichtung an den Server durch ein oder mehrere Benutzerendgeräte, die der einen oder den mehreren Netzwerk-Hotspot-Vorrichtungen entsprechen, wobei ein Benutzerendgerät, das einer Netzwerk-Hotspot-Vorrichtung entspricht, ein Benutzerendgerät ist, das mit einem Hotspot der Netzwerk-Hotspot-Vorrichtung verbunden ist;
Festlegen, durch den Server, eines Benutzerendgeräts, dessen Konfigurationsanforderung zuerst vom Server empfangen wird, als Zielbenutzerendgerät und Senden einer Konfigurationsantwortnachricht an das Zielbenutzerendgerät; und
Initiieren eines Zugriffsprozesses der nicht konfigurierten Vorrichtung für den zweiten Hotspot einer Zielnetzwerk-Hotspot-Vorrichtung durch das Zielbenutzerendgerät nach dem Empfangen der Konfigurationsantwortnachricht, wobei die Zielnetzwerk-Hotspot-Vorrichtung eine Netzwerk-Hotspot-Vorrichtung ist, die einen Hotspot aufweist, mit dem das Zielbenutzerendgerät verbunden ist.

2. Verfahren nach Anspruch 1, wobei der Schritt des Meldens, durch die nicht konfigurierte Vorrichtung, ihrer eigenen Vorrichtungsinformationen an die eine oder mehreren Netzwerk-Hotspot-Vorrichtungen über den ersten Hotspot der einen oder mehreren Netzwerk-Hotspot-Vorrichtungen zum Senden der Vorrichtungsinformationen an den Server umfasst:
Zugreifen, durch die nicht konfigurierte Vorrichtung, nacheinander auf die ersten Hotspots der Netzwerk-Hotspot-Vorrichtungen unter Verwendung erster Hotspot-Zugriffsinformationen des ersten Hotspots jeder Netzwerk-Hotspot-Vorrichtung; und
Senden, durch die nicht konfigurierte Vorrichtung, ihrer eigenen Vorrichtungsinformationen an die Netzwerk-Hotspot-Vorrichtung über den ersten Hotspot der Netzwerk-Hotspot-Vorrichtung.

3. Verfahren nach Anspruch 1, wobei der Schritt des Sendens einer Konfigurationsanforderung für die nicht konfigurierte Vorrichtung an den Server durch ein oder mehrere Benutzerendgeräte, die der einen oder den mehreren Netzwerk-Hotspot-Vorrichtungen entsprechen, umfasst:
Senden, durch das eine oder die mehreren Benutzerendgeräte, einer Abfragenachricht über eine nicht konfigurierte Vorrichtung an die entsprechende Netzwerk-Hotspot-Vorrichtung;
Erzeugen, durch die eine oder die mehreren Netzwerk-Hotspot-Vorrichtungen, einer Benachrichtigungsnachricht über eine nicht konfigurierte Vorrichtung für die nicht konfigurierte Vorrichtung zum Zugreifen auf den ersten Hotspot der Netzwerk-Hotspot-Vorrichtung basierend auf der Abfragenachricht über eine nicht konfigurierte Vorrichtung, und
Empfangen, durch das eine oder die mehreren Benutzerendgeräte, der Benachrichtigungsnachricht über die nicht konfigurierte Vorrichtung und Erzeugen der Konfigurationsanforderung für die nicht konfigurierte Vorrichtung basierend auf der Benachrichtigungsnachricht über die nicht konfigurierte Vorrichtung; und
Senden der Konfigurationsanforderung durch das eine oder die mehreren Benutzerendgeräte an den Server.

4. Verfahren nach Anspruch 1, wobei der Schritt des Initiierens eines Zugriffsprozesses der nicht konfigurierten Vorrichtung für den zweiten Hotspot einer Zielnetzwerk-Hotspot-Vorrichtung durch das Zielbenutzerendgerät nach dem Empfangen der Konfigurationsantwortnachricht umfasst:
Senden einer ersten Netzwerkkonfigurations-Startnachricht durch das Zielbenutzerendgerät an die nicht konfigurierte Vorrichtung nach dem Empfangen der Konfigurationsantwortnachricht;
Zugreifen auf einen dritten Hotspot der Zielnetzwerk-Hotspot-Vorrichtung durch die nicht konfigurierte Vorrichtung nach dem Empfangen der ersten Netzwerkkonfigurations-Startnachricht, wobei es sich bei dem dritten Hotspot um einen Hotspot handelt, der keine Internetzugriffsfähigkeit aufweist;
Empfangen von zweiten Hotspot-Zugangsinformationen eines zweiten Hotspots durch die nicht konfigurierte Vorrichtung, die vom dritten Hotspot der Zielnetzwerk-Hotspot-Vorrichtung gesendet wurden; und
Zugreifen, durch die nicht konfigurierte Vorrichtung, auf den zweiten Hotspot der Zielnetzwerk-Hotspot-Vorrichtung unter Verwendung der zweiten Hotspot-Zugriffsinformationen.

5. Verfahren nach Anspruch 4, ferner umfassend:
Senden einer zweiten Netzwerkkonfigurations-Startnachricht durch den Server an die Zielnetzwerk-Hotspot-Vorrichtung nach dem Empfangen der Konfigurationsanforderung; und
Erzeugen eines dritten Hotspots durch die Zielnetzwerk-Hotspot-Vorrichtung innerhalb einer voreingestellten Zeitspanne nach dem Empfangen der zweiten Netzwerkkonfigurations-Startnachricht.

6. Verfahren nach Anspruch 4, wobei der Schritt des Zugreifens durch die nicht konfigurierte Vorrichtung auf den dritten Hotspot der Zielnetzwerk-Hotspot-Vorrichtung nach dem Empfangen der ersten Netzwerkkonfigurations-Startnachricht umfasst:
Zugreifen, durch die nicht konfigurierte Vorrichtung, auf den dritten Hotspot der Zielnetzwerk-Hotspot-Vorrichtung unter Verwendung dritter Hotspot-Zugriffsinformationen des dritten Hotspots der Zielnetzwerk-Hotspot-Vorrichtung.

7. Verfahren nach Anspruch 1, ferner umfassend:
Senden einer Netzwerkkonfigurationsfehlermeldung durch den Server an andere Benutzerendgeräte als das Zielbenutzerendgerät.

8. Verfahren nach Anspruch 1, ferner umfassend:
Abrufen von IP-Adressinformationen der einen oder mehreren Netzwerk-Hotspot-Vorrichtungen durch den Server; und
Bestimmen einer Region, in der sich die nicht konfigurierte Vorrichtung befindet, durch den Server basierend auf den IP-Adressinformationen der einen oder mehreren Netzwerk-Hotspot-Vorrichtungen.

9. System zum Zugriff auf eine Netzwerk-Hotspot-Vorrichtung durch eine nicht konfigurierte Vorrichtung, wobei das System umfasst:
eine nicht konfigurierte Vorrichtung;
eine oder mehrere Netzwerk-Hotspot-Vorrichtungen;
ein oder mehrere Benutzerendgeräte; und
einen Server;
wobei das System dazu konfiguriert ist, das Verfahren nach einem der Ansprüche 1 bis 8 durchzuführen.

10. Vielzahl maschinenlesbarer Speichermedien mit darauf gespeicherten Anweisungen, die bei Ausführung durch eine Vielzahl von Prozessoren eines Systems, das eine nicht konfigurierte Vorrichtung, eine oder mehrere Netzwerk-Hotspot-Vorrichtungen, ein oder mehrere Benutzerendgeräte und einen Server umfasst, bewirken, dass das System, das Verfahren nach einem der Ansprüche 1 bis 8 durchführt.

## Revendications

1. Procédé pour accéder à un dispositif de point d'accès sans fil de réseau par un dispositif non configuré, ledit dispositif de point d'accès sans fil de réseau créant un premier point d'accès sans fil et un deuxième point d'accès sans fil d'un ou plusieurs dispositifs de point d'accès sans fil de réseau, ledit premier point d'accès sans fil étant un point d'accès sans fil qui ne comporte pas de capacité d'accès à Internet, et le deuxième point d'accès sans fil étant un point d'accès sans fil capable d'accéder à Internet, le procédé comprenant :
la notification, par le dispositif non configuré, de ses propres informations de dispositif auxdits un ou plusieurs dispositifs de point d'accès sans fil de réseau via le premier point d'accès sans fil desdits un ou plusieurs dispositifs de point d'accès sans fil de réseau ;
l'envoi, par lesdits un ou plusieurs dispositifs de point d'accès sans fil de réseau, des informations de dispositif à un serveur ;
l'envoi, par un ou plusieurs terminaux utilisateur correspondant auxdits un ou plusieurs dispositifs de point d'accès sans fil de réseau, d'une demande de configuration pour le dispositif non configuré au serveur, un terminal utilisateur correspondant à un dispositif de point d'accès sans fil de réseau étant un terminal utilisateur connecté à un point d'accès sans fil du dispositif de point d'accès sans fil de réseau ;
la définition, par le serveur, d'un terminal utilisateur dont la demande de configuration est d'abord reçue par le serveur en tant que terminal utilisateur cible et l'envoi d'un message de réponse de configuration au terminal utilisateur cible ; et
le lancement, par le terminal utilisateur cible, d'un processus d'accès du dispositif non configuré pour le deuxième point d'accès sans fil d'un dispositif de point d'accès sans fil de réseau cible après réception du message de réponse de configuration, ledit dispositif de point d'accès sans fil de réseau cible étant un dispositif de point d'accès sans fil de réseau comportant un point d'accès sans fil auquel le terminal utilisateur cible est connecté.

2. Procédé selon la revendication 1, ladite étape de notification par le dispositif non configuré de ses propres informations de dispositif auxdits un ou plusieurs dispositifs de point d'accès sans fil de réseau via le premier point d'accès sans fil desdits un ou plusieurs dispositifs de point d'accès sans fil de réseau pour envoyer les informations de dispositif au serveur, comprenant :
l'accès, par le dispositif non configuré, auxdits premiers points d'accès sans fil des dispositifs de point d'accès sans fil de réseau un par un à l'aide des informations d'accès aux premiers points d'accès sans fil du premier point d'accès sans fil de chaque dispositif de point d'accès sans fil de réseau ; et
l'envoi, par le dispositif non configuré, de ses propres informations de dispositif au dispositif de point d'accès sans fil de réseau via le premier point d'accès sans fil d'un dispositif de point d'accès sans fil de réseau.

3. Procédé selon la revendication 1, ladite étape d'envoi, par un ou plusieurs terminaux utilisateur correspondant auxdits un ou plusieurs dispositifs de point d'accès sans fil de réseau, d'une requête de configuration pour le dispositif non configuré au serveur, comprenant :
l'envoi, par lesdits un ou plusieurs terminaux utilisateur, d'un message de demande de dispositif non configuré au dispositif de point d'accès sans fil de réseau correspondant ;
la génération, par lesdits un ou plusieurs dispositifs de point d'accès sans fil de réseau, d'un message de notification de dispositif non configuré pour le dispositif non configuré afin d'accéder au premier point d'accès sans fil du dispositif de point d'accès sans fil de réseau sur la base du message de demande de dispositif non configuré, et
la réception, par lesdits un ou plusieurs terminaux utilisateur, du message de notification de dispositif non configuré et la génération de la demande de configuration pour le dispositif non configuré sur la base du message de notification de dispositif non configuré ; et
l'envoi, par lesdits un ou plusieurs terminaux utilisateur, de la demande de configuration au serveur.

4. Procédé selon la revendication 1, ladite étape de lancement, par le terminal utilisateur cible, d'un processus d'accès du dispositif non configuré pour le deuxième point d'accès sans fil d'un dispositif de point d'accès sans fil de réseau cible après réception du message de réponse de configuration, comprenant :
l'envoi, par le terminal utilisateur cible, d'un premier message de démarrage de configuration de réseau au dispositif non configuré après réception du message de réponse de configuration ;
l'accès, par le dispositif non configuré, à un troisième point d'accès sans fil du dispositif de point d'accès sans fil de réseau cible après réception du premier message de démarrage de configuration de réseau, ledit troisième point d'accès sans fil étant un point d'accès sans fil qui ne comporte pas de capacité d'accès à Internet ;
la réception, par le dispositif non configuré, d'informations d'accès à un deuxième point d'accès sans fil d'un deuxième point d'accès sans fil envoyées par le troisième point d'accès sans fil du dispositif de point d'accès sans fil de réseau cible ; et
l'accès, par le dispositif non configuré, au deuxième point d'accès sans fil du dispositif de point d'accès sans fil de réseau cible à l'aide des informations d'accès au deuxième point d'accès sans fil.

5. Procédé selon la revendication 4, comprenant en outre :
l'envoi, par le serveur, d'un second message de démarrage de configuration de réseau au dispositif de point d'accès sans fil de réseau cible après réception de la demande de configuration ; et
la génération, par le dispositif de point d'accès sans fil de réseau cible, d'un troisième point d'accès sans fil dans une période de temps prédéfinie après réception du second message de démarrage de configuration de réseau.

6. Procédé selon la revendication 4, ladite étape d'accès par le dispositif non configuré au troisième point d'accès sans fil du dispositif de point d'accès sans fil de réseau cible après réception du premier message de début de configuration de réseau, comprenant :
l'accès, par le dispositif non configuré, au troisième point d'accès sans fil du dispositif de point d'accès sans fil de réseau cible à l'aide d'informations d'accès au troisième point d'accès sans fil du troisième point d'accès sans fil du dispositif de point d'accès sans fil de réseau cible.

7. Procédé selon la revendication 1, comprenant en outre :
l'envoi, par le serveur, d'un message d'échec de configuration de réseau aux terminaux utilisateur autres que le terminal utilisateur cible.

8. Procédé selon la revendication 1, comprenant en outre :
l'obtention, par le serveur, d'informations d'adresse IP desdits un ou plusieurs dispositifs de point d'accès sans fil de réseau ; et
la détermination, par le serveur, d'une zone dans laquelle se trouve le dispositif non configuré sur la base des informations d'adresse IP desdits un ou plusieurs dispositifs de point d'accès sans fil de réseau.

9. Système pour accéder à un dispositif de point d'accès sans fil de réseau par un dispositif non configuré, le système comprenant :
un dispositif non configuré ;
un ou plusieurs dispositifs de point d'accès sans fil de réseau ;
un ou plusieurs terminaux utilisateur ; et
un serveur ;
ledit système étant configuré pour exécuter le procédé selon l'une quelconque des revendications 1 à 8.

10. Pluralité de supports de stockage lisibles par machine sur lesquels sont stockées des instructions qui, lorsqu'elles sont exécutées par une pluralité de processeurs d'un système comprenant un dispositif non configuré, un ou plusieurs dispositifs de point d'accès sans fil de réseau, un ou plusieurs terminaux utilisateur et un serveur, amènent le système à exécuter le procédé selon l'une quelconque des revendications 1 à 8.
